**Europäisches Patentamt**

**European Patent Office**

**Office européen des brevets**

(19)

(11) Veröffentlichungsnummer: **0 085 302**
**A2**

(12) # EUROPÄISCHE PATENTANMELDUNG

(21) Anmeldenummer: **83100123.5**

(22) Anmeldetag: **08.01.83**

(51) Int. Cl.³: **B 62 D 55/28**
**B 62 D 55/20**

(30) Priorität: **01.02.82 US 344668**

(43) Veröffentlichungstag der Anmeldung:
**10.08.83 Patentblatt 83/32**

(84) Benannte Vertragsstaaten:
**DE FR GB IT**

(71) Anmelder: **DEERE & COMPANY**
**1 John Deere Road**
**Moline Illinois 61265(US)**

(72) Erfinder: **Wohlford, William Paul**
**5102 Crow Creek Road**
**Bettendorf Iowa 52722(US)**

(74) Vertreter: **Gramm, Werner, Prof. Dipl.-Ing.**
**Patentanwälte Gramm + Lins Theodor-Heuss-Strasse 2**
**D-3300 Braunschweig(DE)**

(54) **Raupenglied eines Gleiskettenabschnittes sowie Gleiskettenabschnitt.**

(57) Ein Gleiskettenabschnitt einer endlosen Gleiskette (22) weist ein Raupenglied (30) auf, das aus einem Verschleißteil (40) und einem von diesem abgedeckten Stützteil (38) besteht. Das Verschleißteil (40) weist Verschleißführungen (58, 60) für Tragrollen sowie einen Kettenrad-Eingriffssteg (62; 84) auf, der in die Zahnlücken eines die Kette antreibenden Kettenrades (20) eingreift. Verschleißteil (40) sowie Stützteil (38) sind über Verbindungsmittel (34, 36) lösbar mit einem Gleiskettenschuh (32) verbunden, wobei zwischen Raupenglied (30) und Gleiskettenschuh (32) die Enden eines Paars rechteckiger Biegeelemente (28) eingespannt sind. Einige Befestigungsmittel (34) verbinden jedoch lediglich das Stützteil (38) mit dem Gleiskettenschuh (32), so daß sich das Verschleißteil (40) ausbauen läßt, ohne gleichzeitig die Gleiskette (22) auseinandernehmen zu müssen.

FIG. 2

EP 0 085 302 A2

Dipl.-Ing. Prof. Werner Gramm
Dipl.-Phys. Edgar Lins

D-3300 Braunschweig

'atentanwälte GRAMM + LINS

—I—

DEERE & COMPANY

Moline, Illinois 61265

U S A

Telefon: (05 31) 8 00 79
Telex: 09 52 620

Anwaltsakte 324-53 EP-1
Datum 6.Jan.1983

"Raupenglied eines Gleiskettenabschnittes
sowie Gleiskettenabschnitt"

Die Erfindung betrifft ein Raupenglied eines Gleiskettenabschnittes einer endlosen Gleiskette für ein Kettenfahrzeug sowie einen Gleiskettenabschnitt mit einem derartigen Raupenglied.

Herkömmliche Gleisketten für Kettenfahrzeuge bestehen aus einer Vielzahl von Gleiskettenabschnitten, die jeweils rechte und linke Schienenabschnitte aufweisen, die untereinander durch aus Bolzen und Buchse bestehenden Verbindungselementen verbunden sind, die ein Gelenk bilden und so eine Relativverschwenkung der einzelnen Gleiskettenabschnitte untereinander ermöglichen. Ein wesentliches Problem liegt bei diesen Ausführungsformen in dem beim Arbeitseinsatz in den Gelenkverbindungen auftretenden hohen Verschleiß. Hieraus resultiert eine Längung der Gleiskette, so daß diese nicht mehr zuverlässig in das antreibende Kettenrad eingreifen kann, so daß die Gleiskette bisweilen einen Zahn des Kettenrades überspringt oder völlig vom Kettenrad abspringt. Hieraus resultieren weitere Schäden.

Es ist zwar oft möglich, derartige Gleisketten durch Austausch der Bolzen-Buchsen-Gelenke oder aber durch Umdrehen der Buchsen zu überholen, jedoch sind derartige Reparaturen kostspielig und zeitaufwendig und lassen sich nur mit Spezialwerkzeugen durchführen.

Es ist bereits versucht worden, die vorstehend genannten Probleme dadurch auszuräumen, daß die genannten Verbindungsgelenke
durch Biegeelemente ersetzt werden, die zwei jeweils benachbarte
Gleiskettenabschnitte biegeelastisch miteinander verbinden. Beispiele für derartige Biegeelemente sind in den US-Patenten
1,966,450, 2,410,507, 3,346,306 sowie 3,625,574 offenbart.
Allen vorbekannten Ausführungsformen gemeinsam ist jedoch der
Nachteil, daß sich die dem Hauptverschleiß unterliegenden Teile
nur durch Trennung der Gleiskette in umständlicher Weise ausbauen lassen.

Der Erfindung liegt somit die Aufgabe zugrunde, ein Raupenglied
bzw. einen ein Raupenglied aufweisenden Gleiskettenabschnitt zu
entwickeln, die einen einfachen Ausbau verschlissener Einzelteile ohne Trennung der Gleiskette zulassen.

Diese Aufgabe wird gemäß der Erfindung bei einem Raupenglied
durch folgende Merkmale gelöst:

a) Ein Verschleißteil besteht aus einer rechten und einer linken, im Abstand nebeneinander angeordneten und sich in Längsrichtung erstreckenden Verschleißführung;

b) ein Stützteil besteht aus einer rechten und einer linken, im
   Abstand nebeneinander angeordneten und sich in Längsrichtung
   erstreckenden Stützplatte, die jeweils unter der rechten bzw.
   linken Verschleißführung angeordnet sind und seitlich über
   sie hinausragen;

c) Befestigungsmittel verbinden Verschleiß- und Stütztteil
   lösbar miteinander;

- 3 -

d) ein Kettenrad-Eingriffssteg verbindet die vorderen Enden der beiden Verschleißführungen oder der Stützplatten.

Ferner ist es zweckmäßig, wenn die Stützplatten oder die Verschleißführungen über einen Quersteg miteinander verbunden sind, der zwischen den vorderen und hinteren Enden dieser Teile von dem Kettenrad-Eingriffssteg in einem Längsabstand angeordnet ist, der einen Eingriff der beiden Stege in benachbarte Zahnlücken eines zum Antrieb der Gleiskette dienenden Kettenrades ermöglicht.

Erfindungsgemäß kann also der Kettenrad-Eingriffssteg am Verschleißteil oder aber am Stützteil vorgesehen sein, wobei jeweils eine einteilige Ausführungsform zweckmäßig erscheint. Das gilt auch für den genannten Quersteg, der am Stützteil oder aber am Verschleißteil vorgesehen sein kann. Dabei wäre es auch möglich, beide Stege am Stützteil oder Verschleißteil anzuordnen. Jedoch wird der genannte Quersteg zweckmäßigerweise an dem Teil angeordnet sein, das nicht den Kettenrad-Eingriffssteg aufweist.

Der Kettenrad-Eingriffssteg kann auch zweiteilig ausgebildet sein, wobei der eine Teil eine die vorderen Enden der Verschleißführungen miteinander verbindende Verschleißkappe ist, die eine bogenförmige Oberfläche sowie eine sich nach unten öffnende Ausnehmung aufweist, in die eine den zweiten Teil des Kettenrad-Eingriffssteges bildende Querleiste eingreift, die die vorderen Enden der beiden Stützplatten miteinander verbindet und der Form der genannten Ausnehmung angepaßt ist.

In allen diesen Ausführungsbeispielen weisen Kettenrad-Eingriffssteg und der vorzugsweise als Zahnlücken-Reinigungselement ausgebildete Quersteg jeweils einen solchen lichten Längsabstand voneinander auf, daß der Zahn eines die Gleiskette antreibenden Kettenrades zwischen den beiden Stegen durchtreten kann, die dann

- 4 -

in benachbarte Zahnlücken dieses Kettenrades eintauchen.

Ein Gleiskettenabschnitt mit einem erfindungsgemäßen Raupenglied kann gemäß der Erfindung zusätzlich folgende Merkmale aufweisen:

a) Ein Paar im Abstand nebeneinander angeordnete, angenähert rechteckige Biegeelemente;

b) ein Gleiskettenschuh mit einer ersten, im wesentlichen planen Oberfläche, von deren gegenüberliegenden Seite sich eine Greifleiste erstreckt;

c) die Stützplatten des Raupengliedes weisen zweite und dritte, im wesentlichen plane Oberflächen auf, die zusammen mit der genannten ersten Oberfläche zwischen sich die beiden Biegeelemente über etwa einem Drittel ihrer Länge fest einspannen;

d) erste Befestigungsmittel spannen gleichzeitig Verschleiß- und Stützteil gegeneinander sowie Raupenglied und Gleiskettenschuh beidseitig gegen die Biegeelemente;

e) zweite Befestigungsmittel spannen nur das Stützteil und den Gleiskettenschuh beidseitig gegen die Biegeelemente.

Da die zweiten Befestigungsmittel nicht das Verschleißteil des Raupengliedes erfassen, läßt sich das Verschleißteil vom Stützteil lösen, ohne gleichzeitig auch die zwischen Stützteil und Gleiskettenschuh eingeklemmten Biegeelemente lösen zu müssen. Ein Trennen des Gleiskettenabschnitts und damit der Gleiskette ist also nicht erforderlich.

Damit der als Zahnlücken-Reinigungselement ausgebildete Quersteg beim Umlauf der Gleiskette nacheinander in jeweils verschiedene Zahnlücken des Kettenrades eingreift, ist es vorteilhaft, dem Kettenrad eine ungerade Zähnezahl zu geben.

Weitere Merkmale der Erfindung sind Gegenstand der Unteransprüche und werden anhand von Ausführungsbeispielen näher erläutert.

- 6 -

In der Zeichnung sind einige als Beispiele dienende Ausführungsformen der Erfindung dargestellt. Es zeigen:

Figur 1    in rechter Seitenansicht ein Kettenfahrzeug,
           bei dem eine erfindungsgemäße Gleiskette Verwendung finden kann;

Figur 2    in Seitenansicht und Explosionsdarstellung
           einen Gleiskettenabschnitt;

Figur 3    ein Verschleißteil in Draufsicht gemäß der
           Blickrichtung 3-3 in Figur 2;

Figur 4    in Draufsicht ein Stützteil gemäß der Blickrichtung 4-4 in Figur 2;

Figur 5    in Draufsicht einen Gleiskettenschuh gemäß
           der Blickrichtung 5-5 in Figur 2;

Figur 6    die Darstellung gemäß Figur 2 in Stirnansicht;

Figur 7    eine abgewandelte Ausführungsform eines
           Raupengliedes in einer Darstellung gemäß der
           oberen Hälfte der Figur 2;

Figur 8    das in Figur 7 dargestellte Verschleißteil in
           Draufsicht gemäß Blickrichtung 8-8 in Figur 7;

Figur 9    das in Figur 7 dargestellte Stützteil in Draufsicht gemäß Blickrichtung 9-9 in Figur 7;

Figur 10   eine abgewandelte Ausführungsform eines Raupengliedes in einer Darstellung gemäß Figur 7;

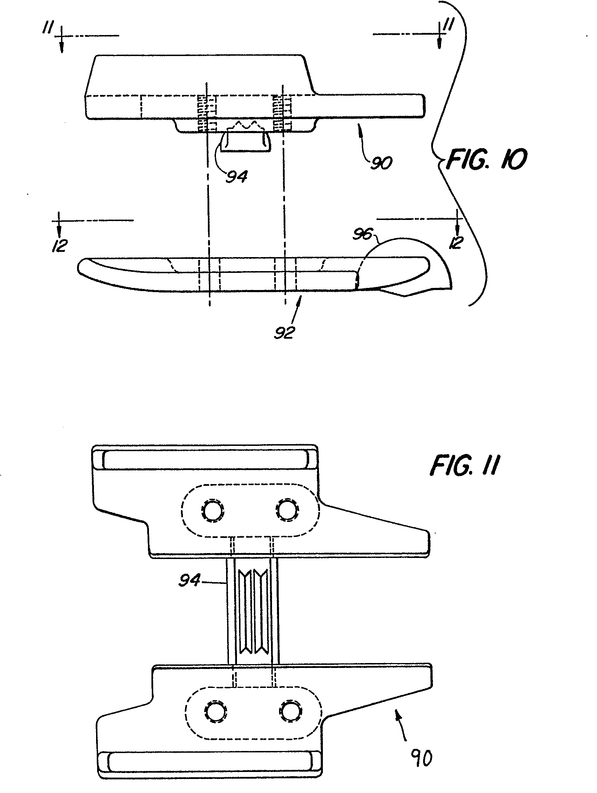

Figur 11    das in Figur 10 dargestellte Verschleißteil
in Draufsicht gemäß Blickrichtung 11-11 in
Figur 10 und

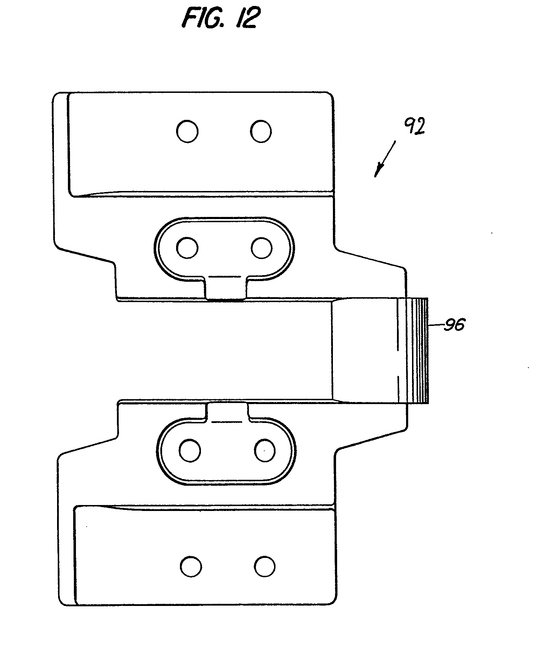

Figur 12    das in Figur 10 dargestellte Stützteil in
Draufsicht gemäß einer Blickrichtung 12-12
in Figur 10.

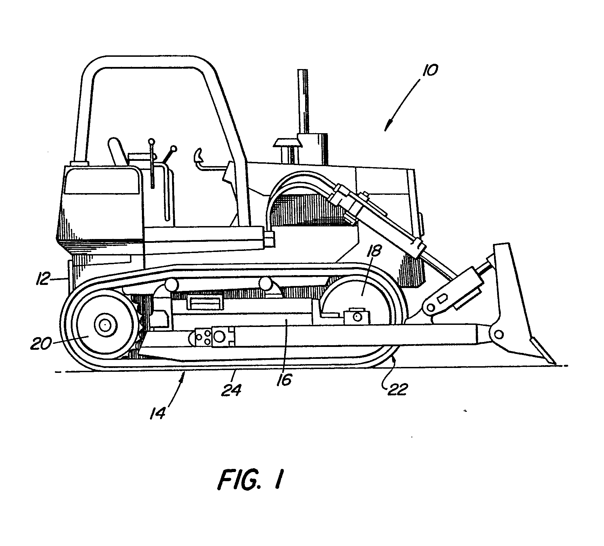

Figur 1 zeigt ein Kettenfahrzeug 10 mit einem Hauptrahmen 12,
der beidseitig Gleiskettenanordnungen 14 aufweist, von denen
lediglich die rechtsseitige dargestellt ist. Jede Gleiskettenanordnung 14 umfaßt einen sich in Längsrichtung erstreckenden
Gleiskettenrahmen 16, der an seinem vorderen Ende ein verschiebbares Umlenkrad 18 für eine endlose Gleiskette 22 aufweist, die
von einem am Hauptrahmen 12 sitzenden Kettenrad 20 angetrieben
wird. Die Gleiskette 22 liegt mit ihrem Untertrum 24 auf dem
Boden auf, wobei die nachfolgende Beschreibung eines Gleiskettenabschnitts davon ausgeht, daß sich dieser Gleiskettenabschnitt
gerade in dem Untertrum 24 befindet, wobei die Blickrichtung des
Betrachters in Vorwärtsfahrtrichtung des Kettenfahrzeuges geht.

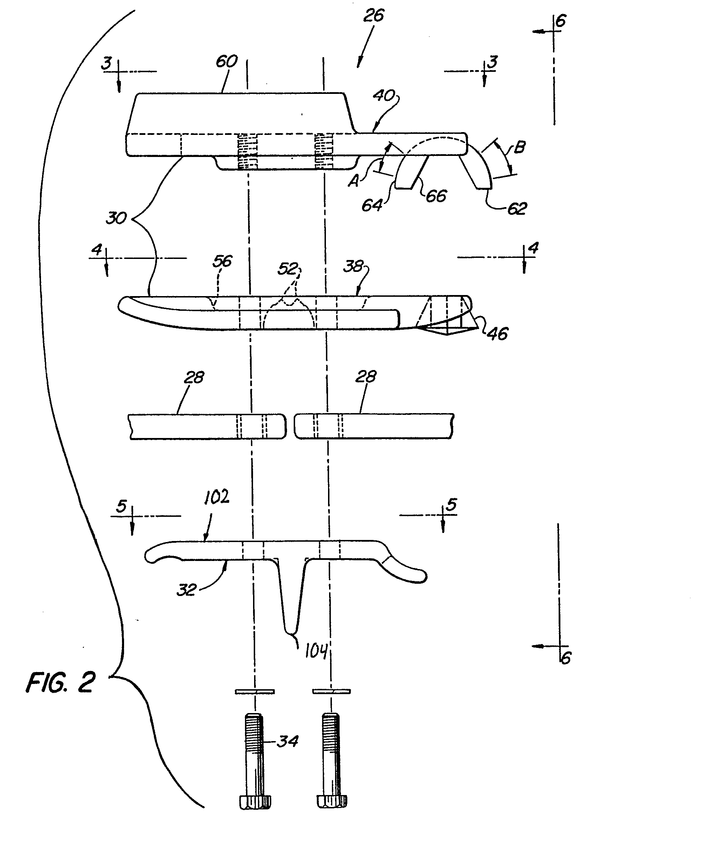

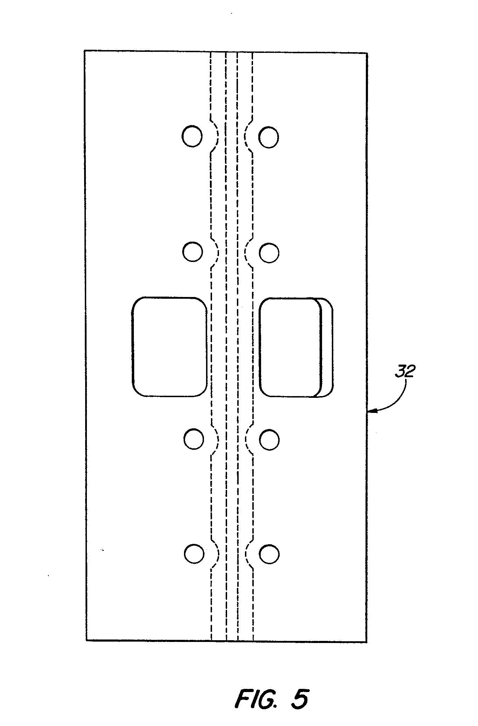

Die Figuren 2 bis 6 zeigen einen Gleiskettenabschnitt 26, der
mit einer Vielzahl gleicher Gleiskettenabschnitte die Gleiskette 22 bildet. Der dargestellte Gleiskettenabschnitt 26 weist
ein Paar nebeneinander liegender, rechteckiger, biegeelastischer
Biegeelemente 28 auf, die mit ihrem einen Ende zwischen einem
Raupenglied 30 und einem Gleiskettenschuh 32 eingeklemmt sind,
die ihrerseits durch links und rechts vorgesehene Schraubbolzenpaare 34,36 miteinander verbunden sind. Gleichzeitig klemmen
Raupenglied 30 und Gleiskettenschuh 32 zwischen sich auch die
hinteren Enden der benachbarten Biegeelemente 28 des benachbarten Gleiskettenabschnitts ein, wie es Figur 2 erkennen läßt. Die
genannten Schraubbolzen 34,36 sind dabei jeweils auch durch die
Biegeelemente 28 hindurchgeführt.

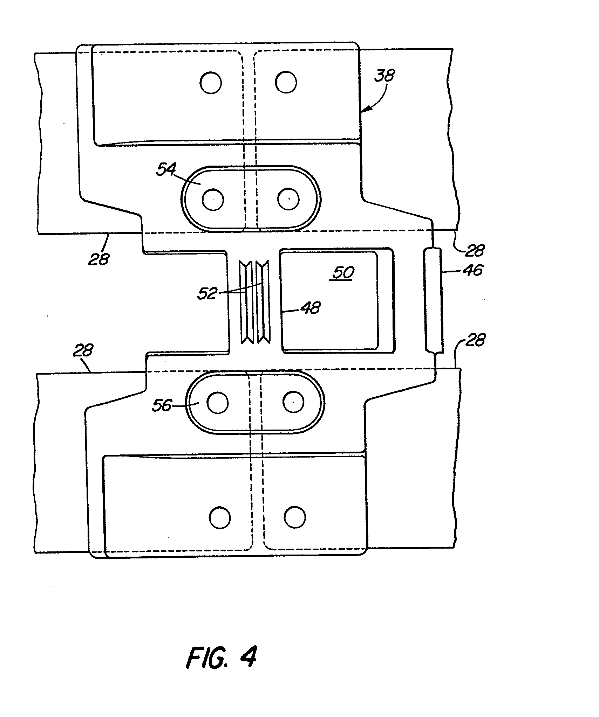

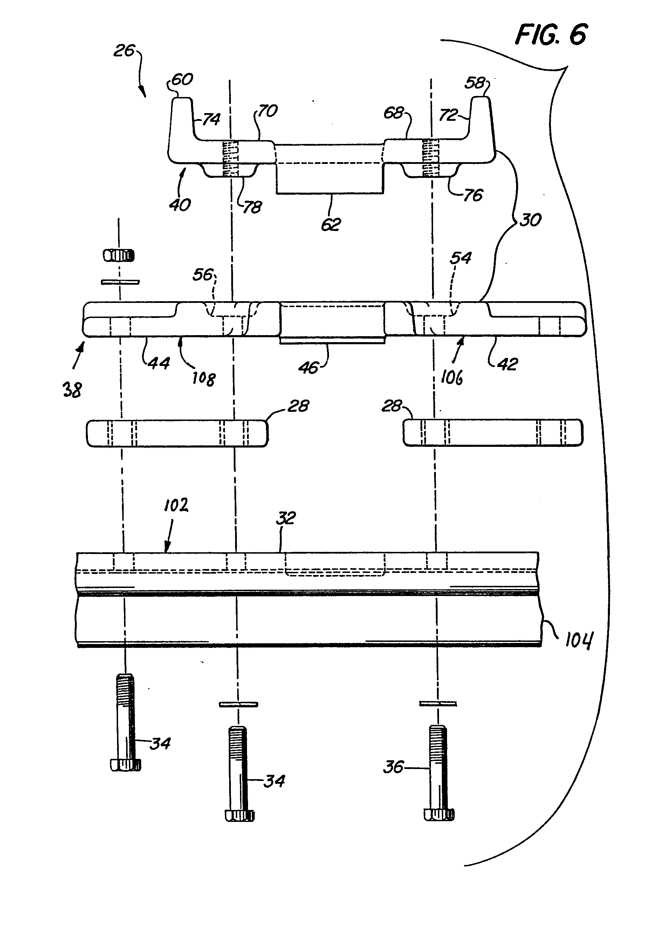

Das Raupenglied 30 ist zweiteilig ausgebildet und besteht aus einem unteren Stützteil 38 und einem oberen Verschleißteil 40. Das Stützteil 38 weist eine rechte und eine linke Stützplatte 42,44 auf (siehe Figur 6), die mit Abstand nebeneinander liegen, flache Unterseiten 106,108 aufweisen und mit ihren vorderen Enden über eine Querleiste 46 und etwa mittig zwischen ihren beiden Enden durch einen als Zahnlücken-Reinigungselement ausgebildeten Quersteg 48 verbunden sind (siehe Figur 4). Die beiden Stützplatten 42,44, die Querleiste 46 sowie der Quersteg 48 begrenzen eine im wesentlichen rechteckige Zahndurchtrittsöffnung 50 für einen Zahn des Kettenrades 20. Figur 2 läßt erkennen, daß die Querleiste 46 im Querschnitt die Form eines halben Hexagon aufweist, während der obere Teil des Querstegs 48 ein Paar quer verlaufende, keilförmige Rippen 52 bildet. Neben den sich gegenüberliegenden Enden dieser Rippen 52 sind in die Oberfläche der beiden Stützplatten 42,44 ovalförmige Ausnehmungen 54,56 eingelassen.

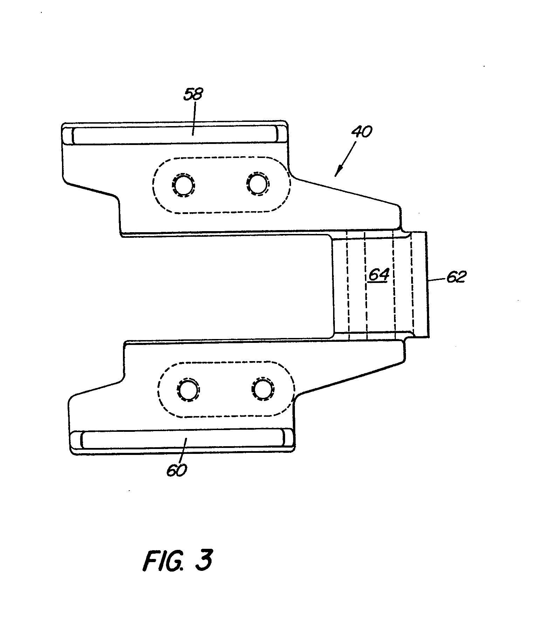

Das Verschleißteil 40 ist gemäß Figur 3 in Draufsicht angenähert U-förmig ausgebildet und weist eine rechte sowie eine linke Verschleißführung 58,60 auf, die mit Abstand nebeneinander liegen und an ihren vorderen Enden über einen Kettenrad-Eingriffssteg in Form einer Verschleißkappe 62 miteinander verbunden sind, die eine zylindrische Oberfläche 64 sowie eine sich nach unten öffnende Ausnehmung 66 aufweist, deren Querschnitt dem der Querleiste 46 entspricht, die in diese Ausnehmung eintaucht. Die Verschleißkappe 62 greift in jeweils eine Zahnlücke des Kettenrades 20 so ein, daß während der Vorwärts- und Rückwärtsfahrt von dem Kettenrad 20 Kräfte auf die Bereiche A und B der Verschleißkappe übertragen werden. Um den in diesen Bereichen auftretenden erhöhten Verschleiß auszugleichen, weist die Verschleißkappe 62 in den Bereichen A und B einen verdickten Materialquerschnitt auf. Die beiden Verschleißführungen 58,60 sind in Stirnansicht (siehe Figur 6) etwa L-förmig ausgebildet und bilden jeweils eine horizontale Rollenbahn 68,70 sowie eine vertikale Rollenführung 72,74. Aus der Unterseite der beiden Rollenbahnen 68,70 ragen Ansätze 76,78, die der Form der Ausnehmungen 54,56 des Stützteils 38 angepaßt sind und in montierter Lage in diese Ausnehmungen eingreifen. Die Schraubbolzen 34,36 sind durch vertikal miteinander fluchtende Bohrungen bzw. Gewindebohrungen durch die Ausnehmungen 54,56 sowie die Ansätze 76,78 hindurchgeführt.

Insbesondere Figur 6 läßt erkennen, daß die jeweils außenliegenden Schraubbolzen 34,36 lediglich Stützteil 38, Biegeelemente 28 sowie Gleiskettenschuh 32 gegeneinander spannen, während nur die jeweils innenliegenden Schraubbolzen 34,36 zusätzlich auch noch das Verschleißteil 40 erfassen. Daher kann das Verschleißteil 40, das den wesentlichen im Betrieb an einem Gleiskettenabschnitt auftretenden Verschleiß aufnimmt, vom Stützteil 38 durch einfaches Lösen der inneren Bolzen 34,36 abgebaut werden; die beiden äußeren Bolzen 34,38 halten dabei die Verbindung zwischen benachbarten Gleiskettenabschnitten 26 aufrecht, so daß ein Trennen der Gleiskette vermieden wird.

Im Gegensatz zu der in den Figuren 2 bis 6 dargestellten Ausführungsform kann es in bestimmten Fällen zweckmäßig sein, den Kettenrad-Eingriffssteg 46,62 einteilig auszubilden. In diesem Fall kann dann dieser Steg entweder am Verschleißteil 40 oder aber am Stützteil 38 vorgesehen werden.

Der in Figur 2 dargestellte Gleiskettenschuh 32 weist eine plane Oberfläche 102 auf, von deren gegenüberliegenden Seite sich eine Greifleiste 104 nach unten erstreckt.

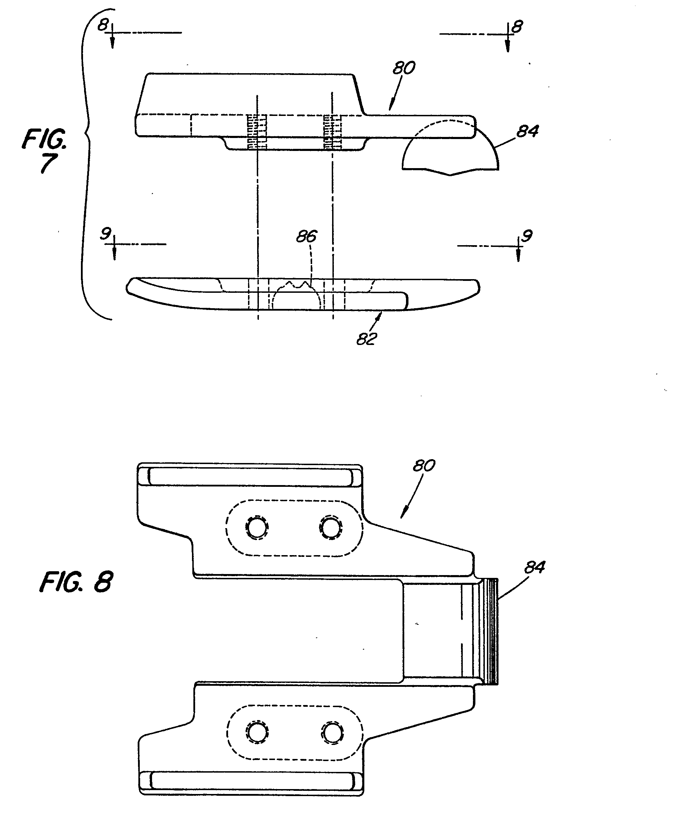

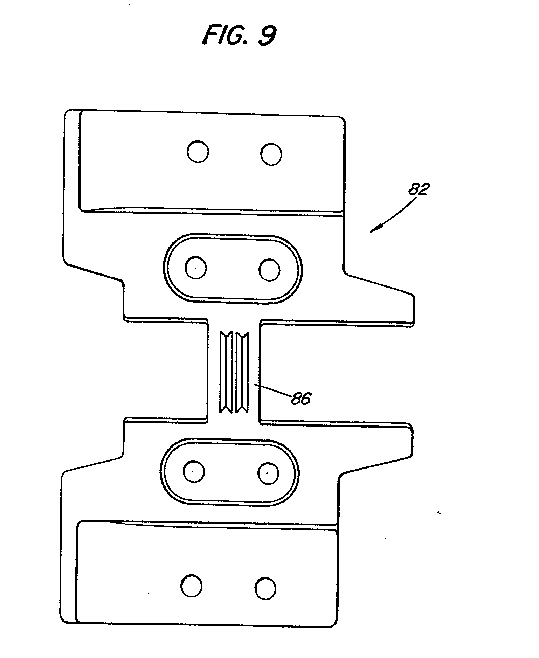

In den Figuren 7 bis 9 ist ein abgewandeltes Raupenglied dargestellt. Die Ausbildung des Verschleißteiles 80 entspricht im wesentlichen der Ausbildung des Verschleißteiles gemäß Figur 3, wobei allerdings der Kettenrad-Eingriffssteg 84 als massiver Halbzylinder ausgebildet ist. Das Stützteil 82 entspricht ebenfalls im wesentlichen dem der Figur 4, weist jedoch keine vergleichbare Querleiste, sondern lediglich einen als Zahnlücken-Reinigungselement ausgebildeten Quersteg 86 auf.

Die Figuren 10 bis 12 zeigen eine weitere Alternativlösung für ein Raupenglied. Hier sind die beiden Verschleißführungen des Verschleißteils 90 über einen als Zahnlücken-Reinigungselement ausgebildeten Quersteg 94 miteinander verbunden, während der als massiver Halbzylinder ausgebildete Kettenrad-Eingriffssteg 96 die vorderen Enden der beiden Stützplatten des Stützteils 92 miteinander verbindet.

In Abwandlung des vorstehend beschriebenen Ausführungsbeispieles wäre es auch möglich, den Quersteg 94 auch noch am Stützteil 92 vorzusehen und dann einzelne Verschleißführungen vorzusehen.

Gr/Gru.

**Patentanwälte GRAMM + LINS**

–I–

Dipl.-Ing. Prof. Werner Gramm
Dipl.-Phys. Edgar Lins

0085302

D-3300 Braunschweig

DEERE & COMPANY

Moline, Illinois 61265

U S A

Patentansprüche:

1. Raupenglied (30) eines Gleiskettenabschnittes einer endlosen Gleiskette (22) für ein Kettenfahrzeug (10), gekennzeichnet durch folgende Merkmale:

   a) Ein Verschleißteil (40;80;90) besteht aus einer rechten
      und einer linken, im Abstand nebeneinander angeordneten
      und sich in Längsrichtung erstreckenden Verschleißführung (58,60);

   b) ein Stützteil (38;82;92) besteht aus einer rechten und
      einer linken, im Abstand nebeneinander angeordneten und
      sich in Längsrichtung erstreckenden Stützplatte (42,44),
      die jeweils unter der rechten bzw. linken Verschleißführung (58,60) angeordnet sind und seitlich über sie
      hinausragen;

   c) Befestigungsmittel (34,36) verbinden Verschleiß- und
      Stützteil (40,38; 80,82; 90,92) lösbar miteinander;

- 2 -

- 2 -

d) ein Kettenrad-Eingriffssteg (46,62; 84;96) verbindet die
   vorderen Enden der beiden Verschleißführungen (58,60) oder
   der Stützplatten (42,44).

2. Raupenglied nach Anspruch 1, dadurch gekennzeichnet, daß die
   Stützplatten (42,44) oder die Verschleißführungen (58,60)
   über einen Quersteg (48;86;94) miteinander verbunden sind,
   der zwischen den vorderen und hinteren Enden dieser Teile von
   dem Kettenrad-Eingriffssteg (46,62;84;96) in einem Längsabstand angeordnet ist, der einen Eingriff der beiden Stege (46,
   62,48;84,86;96,94) in benachbarte Zahnlücken eines zum Antrieb der Gleiskette (22) dienenden Kettenrades (20) ermöglicht.

3. Raupenglied nach Anspruch 2, dadurch gekennzeichnet, daß sich
   Querrippen (52) über die Länge des Quersteges (48;86;94) erstrecken, der ein Zahnlücken-Reinigungselement darstellt.

4. Raupenglied nach Anspruch 1, 2 oder 3, dadurch gekennzeichnet,
   daß der Kettenrad-Eingriffssteg (46,62) zweiteilig ausgebildet ist, wobei der eine Teil eine die vorderen Enden der Verschleißführungen (58,60) miteinander verbindende Verschleißkappe (62) ist, die eine bogenförmige Oberfläche (64) sowie
   eine sich nach unten öffnende Ausnehmung (66) aufweist, in die
   eine den zweiten Teil des Kettenrad-Eingriffssteges bildende
   Querleiste (46) eingreift, die die vorderen Enden der beiden
   Stützplatten (42,44) miteinander verbindet und der Form der
   genannten Ausnehmung (66) angepaßt ist.

5. Raupenglied nach Anspruch 4, dadurch gekennzeichnet, daß die
   Ausnehmung (66) der Verschleißkappe (62) im Querschnitt die
   Form eines halben Hexagon aufweist.

- 3 -

6. Raupenglied nach Anspruch 4 oder 5, dadurch gekennzeichnet, daß die bogenförmige Oberfläche (64) der Verschleißkappe (62) von einem Kettenrad-Zahn in vorbestimmten Bereichen (A,B) beaufschlagt ist, in denen der Materialquerschnitt der Verschleißkappe verdickt ist.

7. Raupenglied nach einem der vorhergehenden Ansprüche, dadurch gekennzeichnet, daß die beiden Verschleißführungen (58,60) im Vertikalschnitt jeweils L-förmig ausgebildet sind und jeweils eine Rollenbahn (68,70) sowie eine Rollenführung (72,74) bilden.

8. Raupenglied nach einem der vorhergehenden Ansprüche, dadurch gekennzeichnet, daß das Verschleißteil (40;80) in Draufsicht angenähert U-förmig ausgebildet ist.

9. Raupenglied nach einem der vorhergehenden Ansprüche, dadurch gekennzeichnet, daß zwischen den einander zugeordneten Verschleißführungen (58,60) und Stützplatten (42,44) jeweils ein Formschluß (76,54;78,56) vorgesehen ist.

10. Gleiskettenabschnitt einer endlosen Gleiskette (22) für ein Kettenfahrzeug (10), mit einem Raupenglied (30) gemäß einem der vorhergehenden Ansprüche, gekennzeichnet durch folgende Merkmale:

    a) Ein Paar im Abstand nebeneinander angeordnete, angenähert rechteckige Biegeelemente (28);

    b) ein Gleiskettenschuh (32) mit einer ersten, im wesentlichen planen Oberfläche (102), von deren gegenüberliegenden Seite sich eine Greifleiste (104) erstreckt;

    c) die Stützplatten (42,44) des Raupengliedes (30) weisen zweite und dritte, im wesentlichen plane Oberflächen (106, 108) auf, die zusammen mit der genannten ersten Ober-

0085302

- 4 -

fläche (102) zwischen sich die beiden Biegeelemente (28)
über etwa einem Drittel ihrer Länge fest einspannen;

d) erste Befestigungsmittel (34,36) spannen gleichzeitig Verschleiß- und Stützteil (40,38; 80,82; 90,92) gegeneinander sowie Raupenglied (30) und Gleiskettenschuh (32) beidseitig gegen die Biegeelemente (28);

e) zweite Befestigungsmittel (34,36) spannen nur das Stützteil (38;82;92) und den Gleiskettenschuh (32) beidseitig
gegen die Biegeelemente (28).

Patentanwälte
G r a m m    +    L i n s
Gr/Gru.

1 / 10

FIG. 1

FIG. 2

58

40

64

62

60

FIG. 3

FIG. 4

*FIG. 5*

FIG. 6

FIG.
7

80

84

9

86

82

9

FIG. 8

80

84

FIG. 9

0085302

FIG. 10

94

90

96

92

FIG. 11

94

90

FIG. 12